# EUROPÄISCHE PATENTANMELDUNG

(11) **EP 4 797 032 A1**
(43) Veröffentlichungstag der Anmeldung: **26.08.2026**
(21) Anmeldenummer: 25159705.0
(22) Anmeldetag: 24.02.2025
(51) Int. Cl.: G05D 16/06

(54) **GASDRUCKREGLER, INSBESONDERE DRUCKMINDERER, MIT INTEGRIERTER SICHERHEITSEINRICHTUNG**

(71) Anmelder: GOK Regler- und Armaturen Gesellschaft mbH & Co. KG, 97340 Marktbreit (DE)
(72) Erfinder: SMEENK, Alfons, 97340 Marktbreit (DE); WECHSLER, Samuel, 97340 Marktbreit (DE); MAJUMDER, Arko, 97340 Marktbreit (DE)
(74) Vertreter: Vossius & Partner Patentanwälte Rechtsanwälte mbB

(57) **Zusammenfassung**

Es wird ein Gasdruckregler (10) mit integrierter Sicherheitseinrichtung (40) vorgeschlagen. Der Gasdruckregler (10) weist auf: ein Gehäuse (12), eine im Gehäuse (12) angeordnete Membran (14), die das Gehäuse (12) in einen ersten und zweiten Gehäusebereich (16, 18) unterteilt, eine in dem ersten Gehäusebereich (16) angeordnete Stellfeder (20), die mit der Membran (14) verbunden ist, ein in dem zweiten Gehäusebereich (18) angeordneter Gaseinlass (24) und Gasauslass (28), ein in dem zweiten Gehäusebereich (18) angeordneter Ventilhebel (30), der zwischen dem Gaseinlass (24) und dem Gasauslass (28) angeordnet und zwischen einer geschlossenen Stellung und einer offenen Stellung bewegbar ist, eine Hebelöse (38), die mit der Membran (14) und dem Ventilhebel (30) derart verbunden ist, dass eine hervorgerufene Auslenkung der Membran (14) in eine Bewegung des Ventilhebels (30) überführbar ist, und eine Sicherheitseinrichtung (40), die bei Überschreiten einer vorbestimmten Beschleunigung den Gaseinlass (24) schließt, wobei die Sicherheitseinrichtung (40) einen Schieber (42) aufweist, der im Sicherheitsfall derart auf den Ventilhebel (30) wirkt, dass der Ventilhebel (30) unabhängig von einer Bewegung der Hebelöse (38) in die geschlossene Stellung bewegbar ist.

## Beschreibung

### Technisches Gebiet der Erfindung

Die vorliegende Erfindung betrifft einen Gasdruckregler mit integrierter Sicherheitseinrichtung. Insbesondere betrifft die Erfindung einen Druckminderer, der z.B. in Vans und/oder Campern einsetzbar ist und eine integrierte Sicherheitseinrichtung aufweist, wobei die Sicherheitseinrichtung dazu ausgebildet ist, bei Überschreiten einer vorbestimmten Beschleunigung, wie beispielsweise im Fall eines Crashs bzw. Unfalls, einen Gasdurchfluss durch den Druckminderer zu unterbrechen.

### Hintergrund

Gasdruckregler dienen zum Regeln und/oder Einstellen eines definierten Gasdrucks. Häufig werden Gasdruckregler als Druckminderer in Schlauch- oder Leitungssystemen eingesetzt, um einen an der Eingangsseite vorhandenen Gasdruck, der beispielsweise von einer Gasflasche bereitgestellt wird, auf einen an der Ausgangseite gewünschten Ausgangsdruck zu regeln.

Gasdruckregel bzw. Druckminderer kommen unter anderem in Campern zum Einsatz, wenn diese über ein Gasleitungssystem zur Versorgung einer gasbetriebenen Einheit wie beispielsweise einer Heizung und/oder einer Kochstelle verfügen.

Die Gasflasche darf während der Fahrt geöffnet bleiben (z.B. um die gasbetriebene Einheit - wie etwa eine Heizung - während der Fahrt betreiben zu können), falls eine Gasabschalteinrichtung bzw. eine Sicherheitseinrichtung vorhanden ist (die auch als Crash-Sensor bezeichnet werden kann). Die Sicherheitseinrichtung soll im Fall eines Crashs sicherstellen, dass aus den Abschnitten des Leitungssystems, die flussabwärts von der Sicherheitseinrichtung liegen, kein Gas entweichen kann. Die Sicherheitseinrichtung kann daher auch als Crash-Sensor bezeichnet werden. Solche Sicherheitseinrichtungen sind z.B. aus EP 2 096 340 A1, EP 3 822 524 A1 und EP 3 822 525 A1 bekannt.

Aus dem Stand der Technik ist ferner bekannt, dass die Sicherheitseinrichtung auf den Druckminderer einwirken kann. Ein Beispiel für eine auf einen Druckminderer einwirkende Sicherheitseinrichtung ist in EP 3 833 895 A1 angegeben. Die Sicherheitseinrichtung wirkt im Fall eines Crashs von außen auf die Mechanik des Druckminderers und schließt dessen Gaseinlass.

Allerdings hat sich herausgestellt, dass die aus dem Stand der Technik bekannten Sicherheitseinrichtungen in Campern und/oder Vans nur bedingt einsetzbar sind. Grund ist der vergleichsweise große Bauraum der bekannten Sicherheitseinrichtungen.

Dies stellt insbesondere in Vans ein Problem dar, weil der Bauraum dort oft besonders eng ist. Bisher ist gerade in Vans deshalb häufig kein Crash-Sensor verbaut. Die Gasflasche muss daher vor jeder Weiterfahrt geschlossen werden, was umständlich ist und vom Fahrer des Vans vergessen werden könnte.

Aufgabe der vorliegenden Erfindung ist es daher, einen Gasdruckregler, insbesondere Druckminderer, mit integrierter Sicherheitseinrichtung, insbesondere einem integrierten Crash-Sensor, bereitzustellen, der sich durch eine besonders kompakte Bauweise auszeichnet.

### Lösung des Problems

Diese und andere Aufgaben, die durch Lesen der vorliegenden Beschreibung offensichtlich werden, werden durch den Gegenstand des unabhängigen Anspruchs 1 gelöst. Bevorzugte Ausgestaltungen sind in den abhängigen Ansprüchen angegeben.

Gemäß einem Aspekt der vorliegenden Erfindung wird ein Gasdruckregler, z.B. Druckminderer, bereitgestellt, der aufweist: ein Gehäuse; eine in dem Gehäuse angeordnete Membran, die das Gehäuse in einen ersten Gehäusebereich und in einen zweiten Gehäusebereich unterteilt, wobei der erste Gehäusebereich ein gegenüber einer Umgebung des Gehäuses offener Gehäusebereich ist und der zweite Gehäusebereich ein mit Gas beaufschlagbarer Gehäusebereich ist; ein in dem zweiten Gehäusebereich angeordneter Gaseinlass; ein in dem zweiten Gehäusebereich angeordneter Gasauslass; ein in dem zweiten Gehäusebereich angeordneter Ventilhebel, der strömungsmäßig zwischen dem Gaseinlass und dem Gasauslass angeordnet und zwischen einer geschlossenen Stellung, in der der Gaseinlass geschlossen, und einer offenen Stellung, in der der Gaseinlass geöffnet ist, bewegbar ist; eine Hebelöse, die mit der Membran und dem Ventilhebel derart verbunden ist, dass eine durch einen Druckunterschied zwischen dem ersten und zweiten Gehäusebereich hervorgerufene Auslenkung der Membran in eine Bewegung des Ventilhebels überführbar ist; und eine Sicherheitseinrichtung, die dazu ausgebildet ist, den Gaseinlass bei Überschreiten einer vorbestimmten Beschleunigung zu schließen, wobei die Sicherheitseinrichtung vorzugsweise einen Schieber aufweist, der im Sicherheitsfall derart auf den Ventilhebel wirkt, dass der Ventilhebel unabhängig von einer Bewegung der Hebelöse in die geschlossene Stellung bewegbar ist. Der Gasdruckregler weist vorzugsweise eine in dem ersten Gehäusebereich angeordnete Stellfeder auf, die mit der Membran verbunden und dazu ausgebildet ist, die Membran mit einer vorbestimmten Vorspannkraft vorzuspannen.

Der erfindungsgemäße Gasdruckregler beruht zumindest teilweise auf der Erkenntnis, dass im Fall eines Crashs anstelle eines separaten Abschaltventils der üblicherweise zum Regeln genutzte Ventilhebel geschlossen wird. Die Idee ist, eine Bewegung des Ventilhebels von einer Bewegung der Hebelöse zu entkoppeln. Dies ermöglicht es, dass im Crash-Fall der Ventilhebel unabhängig von einer Bewegung der Hebelöse geschlossen werden kann.

Mit anderen Worten wurde erkannt, dass die aus dem Stand der Technik bekannten Gasdruckregler und/oder Druckminderer üblicherweise eine Kopplung zwischen Hebelöse und Ventilhebel aufweisen, dergestalt, dass eine Bewegung der Hebelöse in eine korrespondierende Bewegung des Ventilhebels überführt wird. Im Gegensatz dazu wird bei dem erfindungsgemäßen Gasdruckregler vorgeschlagen, diese (bekannte) Kopplung zumindest teilweise aufzuheben, um im Crash-Fall eine unabhängige Bewegung des Ventilhebels zum Schließen des Gaseinlasses zu ermöglichen. Die Erfinder schlagen vor, einen Schieber zu verwenden, der im Fall eines Crashs derart auf den Ventilhebel einwirkt, dass dieser unabhängig von einer Bewegung der Hebelöse in die geschlossene Stellung bewegbar ist.

Bevorzugt ist der Schieber in dem zweiten Gehäusebereich angeordnet ist. Mit anderen Worten ist der Schieber bevorzugt in dem mit Gas beaufschlagbaren Gehäusebereich angeordnet.

Bevorzugt ist eine Bewegung des Schiebers von einer Bewegung des Ventilhebels und/oder von einer Bewegung der Hebelöse entkoppelt.

Bevorzugt ist die Hebelöse entlang einer ersten Achse bewegbar und ist der Schieber entlang einer zur ersten Achse unter einem Winkel verlaufenden zweiten Achse bewegbar, vorzugsweise schiebbar. Die erste und zweite Achse können windschief zueinander angeordnet sein, müssen sich also nicht notwendigerweise schneiden. Der zwischen den Achsen vorhandene Winkel kann ein Winkel im dreidimensionalen Raum sein. Vorzugsweise ist der Winkel zwischen der ersten Achse und der zweiten Achse in einem Bereich von 80° bis 100°, vorzugsweise in einem Bereich von 85° bis 95°, weiter vorzugweise 90°.

Bevorzugt weist der Schieber eine schräg verlaufende Betätigungsfläche auf, die dazu ausgebildet ist, den Ventilhebel bei einer Bewegung des Schiebers in Schließrichtung von der offenen Stellung in die geschlossene Stellung zu bewegen. Vorzugsweise ist der Schieber entlang einer horizontalen Führungsfläche geführt. Vorzugsweise nimmt die Betätigungsfläche mit der horizontalen Führungsfläche einen spitzen Winkel ein, wobei der spitze Winkel vorzugsweise in einem Bereich von 10° bis 60°, stärker bevorzugt 20° bis 45°, liegen kann.

Bevorzugt weist das Gehäuse einen Anschlag auf, der dazu ausgebildet ist, eine Bewegung des Schiebers in Schließrichtung zu begrenzen. Der Anschlag kann eine Stufe oder ein Rastabschnitt im Gehäuse sein.

Bevorzugt weist der Schieber eine außerhalb des Gehäuses angeordnete Betätigungseinheit auf, die dazu ausgebildet ist, den Schieber von einer Schließstellung in eine geöffnete Stellung zurückzuziehen und vorzugsweise einen Auslösezustand der Sicherheitseinrichtung anzuzeigen.

Bevorzugt ist der Ventilhebel als ein (erster) Kipphebel ausgebildet, vorzugsweise wobei der erste Kipphebel um eine erste Kippachse kippbar ist, der erste Kipphebel eine erste Ventilhebelseite und eine zweite Ventilhebelseite aufweist, ein Ende der ersten Ventilhebelseite zum Öffnen und Schließen des Gaseinlasses ausgebildet ist und ein Ende der zweiten Ventilhebelseite zur Kopplung mit der Hebelöse ausgebildet ist. Vorzugsweise ist die erste Ventilhebelseite kürzer als die zweite Ventilhebelseite.

Bevorzugt ist der erste Kipphebel derart ausgebildet, dass der erste Kipphebel selbsttätig in die offene Stellung kippt. Der erste Kipphebel kann durch Schwerkraft in die offene Stellung kippen oder durch konstruktive Maßnahmen wie beispielsweise eine Feder, die den ersten Kipphebel in die offene Stellung vorspannt bzw. zwingt.

Bevorzugt ist ein von dem Gaseinlass fernes Ende des Ventilhebels in einer Öffnung der Hebelöse geführt. Vorzugsweise ist die Öffnung als Langloch ausgebildet, wobei das in der Öffnung geführte Ende des Ventilhebels durch die Sicherheitseinrichtung, vorzugsweise den Schieber, derart auslenkbar ist, dass der Ventilhebel unabhängig von einer Bewegung der Hebelöse von der offenen Stellung in die geschlossene Stellung bewegbar ist. Vorzugsweise erstreckt sich eine Längsrichtung des Langlochs in Richtung der ersten Achse.

Bevorzug ist die Öffnung als eine Bohrung mit einer Verlängerung ausgebildet ist, wobei das in der Öffnung geführte Ende des Ventilhebels durch den Schieber entlang der Verlängerung von der offenen Stellung in die geschlossene Stellung auslenkbar ist. Die Bohrung mit Verlängerung kann als Langloch ausgeführt sein.

Bevorzugt liegt in der offenen Stellung des Ventilhebels das in der Öffnung geführte Ende des Ventilhebels an einem als Anlagefläche ausgebildeten ersten Ende der Öffnung an. Die Anlagefläche kann eine untere, von der Membran am weitesten entfernte Fläche des Langlochs sein. Die Anlagefläche kann eine Mantelfläche der Öffnung sein. Mit anderen Worten kann der Ventilhebel an der Anlagefläche bzw. der unteren Fläche des Langlochs anliegen bzw. aufliegen, z.B. wenn der Ventilhebel selbsttätig in die offene Stellung kippt.

Bevorzugt kontaktiert bei einer Auslenkung der Membran in Richtung des ersten Gehäusebereichs die Anlagefläche der Öffnung das in der Öffnung geführte Ende derart, dass der Ventilhebel in Richtung der geschlossenen Stellung bewegt wird. Mit anderen Worten kann der Ventilhebel an der unteren, von der Membran am weitesten entfernten Fläche der Öffnung anliegen. Bei einem Druckunterschied zwischen den beiden Gehäusebereichen, z.B. bei einem Druckunterschied, der die Membran in Richtung des ersten Gehäusebereichs auslenkt, bewegt sich die Hebelöse vorzugsweise in Richtung des ersten Gehäusebereichs, wodurch der an der unteren Fläche anliegenden Ventilhebel nach oben in die geschlossene Stellung bewegt wird.

Bevorzugt ist der Schieber in einer auf den Ventilhebel wirkenden Schließrichtung vorgespannt, vorzugsweise mittels einer sich am Gehäuse abstützenden Feder, weiter bevorzugt einer Schraubenfeder, insbesondere einer Schraubenfeder, die um einen Abschnitt des Schiebers angeordnet ist.

Bevorzugt weist die Sicherheitseinrichtung eine Sperrklinke auf, die dazu ausgebildet ist, eine Bewegung des Schiebers in Schließrichtung zu sperren.

Bevorzugt ist die Sperrklinke in dem zweiten Gehäusebereich angeordnet. Mit anderen Worten können die Sperrklinke und der Schieber im zweiten Gehäusebereich angeordnet sein.

Bevorzugt ist die Sperrklinke als (zweiter) Kipphebel ausgebildet und/oder ist die Sperrklinke um eine zweite Kippachse kippbar. Die Sperrklinke weist vorzugsweise eine erste Sperrklinkenseite und eine auf der gegenüberliegenden Seite der zweiten Kippachse angeordnete zweite Sperrklinkenseite auf. Vorzugsweise sperrt die erste Sperrklinkenseite die Bewegung des Schiebers in Schließrichtung.

Bevorzug ist die erste Sperrklinkenseite länger als die zweite Sperrklinkenseite.

Bevorzugt ist die Sperrklinke derart ausgebildet, dass sie selbsttätig in eine die Bewegung des Schiebers in Schließrichtung sperrende Sperrstellung kippt.

Bevorzugt ist die zweite Kippachse der Sperrklinke in einem Winkel zur ersten Kippachse des Ventilhebels angeordnet. Vorzugsweise ist der Winkel zwischen der zweiten Kippachse und der ersten Kippachse in einem Bereich von 80° bis 100°, vorzugsweise in einem Bereich von 85° bis 95°, weiter vorzugweise 90°.

Bevorzugt ist der Schieber entlang der zweiten Achse bewegbar, vorzugsweise schiebbar, und ist die zweite Achse in einem Winkel zur zweiten Kippachse angeordnet, wobei der Winkel zwischen der zweiten Achse und der zweiten Kippachse in einem Bereich von 80° bis 100°, vorzugsweise in einem Bereich von 85° bis 95°, weiter vorzugweise 90° ist.

Mit anderen Worten kann die zweite Kippachse senkrecht zur ersten Kippachse des Ventilhebels sein, senkrecht zur ersten Achse des Hebelöse der Hebelöse und/oder senkrecht zur zweiten Achse des Schiebers.

Der erwähnten Achsen können windschief zueinander angeordnet sein, müssen sich also nicht notwendigerweise schneiden. Die zwischen den Achsen vorhandene Winkel können Winkel im dreidimensionalen Raum sein.

Bevorzugt weist die Sicherheitseinrichtung einen Trägheitskörper auf, der dazu ausgebildet ist, bei Überschreiten der vorbestimmten Beschleunigung durch eine auftretende Beschleunigungskraft von einer Ruheposition in eine ausgelenkte Position bewegt zu werden, vorzugsweise wobei in der Ruheposition des Trägheitskörpers eine Bewegung des Schiebers in Schließrichtung gesperrt ist und in der ausgelenkten Position des Trägheitskörpers eine Bewegung des Schiebers in Schließrichtung freigegeben ist, sodass der Ventilhebel durch den Schieber in die geschlossene Stellung bewegbar und der Gaseinlass durch den Ventilhebel verschließbar ist.

Vorzugsweise ist der Trägheitskörper in der ausgelenkten Position derart positioniert, dass die Sperrklinke von der Sperrstellung in eine Freigabestellung bewegbar bzw. kippbar ist, in der eine Sperrung des Schiebers aufgehoben und die Bewegung des Schiebers in Schließrichtung freigegeben ist.

Bevorzugt weist die Sperrklinke ein erstes Ende (bzw. einen ersten Endbereich) und ein zweites Ende (bzw. einen zweiten Endbereich) auf. Vorzugsweise kontaktiert in einer Sperrstellung der Sperrklinke das zweite Ende der Sperrklinke den Trägheitskörper. Vorzugsweise kontaktiert das zweite Ende der Sperrklinke in der Sperrstellung den Trägheitskörper derart, dass ein Kippen der Sperrklinke in die Freigabestellung nicht möglich ist. Vorzugsweise kontaktiert das zweite Ende der Sperrklinke in der Sperrstellung den Trägheitskörper derart, dass das zweite Ende nicht nach unten Kippen kann.

Vorzugsweise kontaktiert in der Sperrstellung der Sperrklinke das erste Ende der Sperrklinke den Schieber, z.B. die Betätigungsfläche des Schiebers. Der Schieber versucht in der Sperrstellung, das erste Ende des Schiebers nach oben zu drücken. Eine solche Bewegung ist vorzugsweise in der Sperrstellung nicht möglich, weil der Trägheitsköper die Bewegung des zweiten Endes des Schiebers nach unten verhindert.

Bevorzugt ist der Trägheitskörper in dem zweiten Gehäusebereich angeordnet. Mit anderen Worten können sowohl der Trägheitskörper als auch die Sperrklinke und der Schieber der Sicherheitseinrichtung im zweiten Gehäusebereich und damit in dem mit Gas beaufschlagbaren Gehäusebereich angeordnet sein. Die Komponenten der Sicherheitseinrichtung können also im selben Gehäusebereich angeordnet sein, wie der Ventilhebel.

Bevorzugt ist der Trägheitskörper ein flächig aufliegender Trägheitskörper. Der Trägheitskörper kann auch eine Kugel sein.

Bevorzug rastet die Sperrklinke, vorzugsweise deren zweites Ende, in den Trägheitskörper ein, vorzugsweise in der Freigabestellung der Sperrklinke, also im ausgelösten Zustand der Sicherheitseinrichtung.

Bevorzugt weist die Sicherheitseinrichtung einen magnetischen Rückholmechanismus auf, der dazu ausgebildet ist, den ausgelenkten Trägheitskörper in seine Ruheposition zurückzuholen. Der magnetische Rückholmechanismus weist einen geringen Bauraum auf, verglichen mit anderen Rückholmechanismen, wie beispielsweise mechanischen Rückholmechanismen. Alternativ kann die Sicherheitseinrichtung einen Rückholmechanismus mit einer Vertiefung aufweisen, wobei der Trägheitskörper aufgrund der Schwerkraft in eine energetisch günstigere Position innerhalb der Vertiefung zurückkehrt.

Bevorzugt weist der Trägheitskörper ein ferromagnetisches Material auf und weist das Gehäuse einen Magneten auf, der eine magnetische Rückholkraft auf den Trägheitskörper ausübt. Alternativ oder zusätzliche weist der Trägheitskörper einen ersten Magneten auf und weist das Gehäuse einen zweiten Magneten auf, wobei die beiden Magnete derart ausgewählt sind, dass eine auf den Trägheitskörper wirkende magnetische Rückholkraft ausgeübt wird.

Bevorzugt ist, wenn die Sicherheitseinrichtung ausgelöst hat und der Schieber den Ventilhebel in die geschlossene Stellung bewegt hat, eine magnetische Rückholung des Trägheitskörpers so lange unterbunden ist, bis der Schieber in seine geöffnete Stellung zurückgezogen ist.

Bevorzugt weist das zweite Ende der Sperrklinke eine Kontaktfläche auf, die dazu ausgebildet ist, bei einer Rückholung des Trägheitskörpers in die Ruheposition eine Außenfläche des Trägheitskörpers zu kontaktieren und dadurch eine Drehung der Sperrklinke von der Freigabestellung in die Sperrstellung zu bewirken und/oder zu unterstützen.

Bevorzugt ist, wenn die Sicherheitseinrichtung ausgelöst hat und der Schieber den Ventilhebel in die geschlossene Stellung bewegt hat, die Bewegung der Sperrklinke von der Freigabestellung in die Sperrstellung durch den Schieber so lange blockiert, bis der Schieber in seine geöffnete Stellung zurückgezogen ist, vorzugsweise gegen die Kraft der Feder. Vorzugsweise ist die Bewegung der Sperrklinke von der Freigabestellung in die Sperrstellung durch die zweite Hebelseite blockiert, solange der Schieber den Ventilhebel in der geschlossenen Stellung hält.

Wie sich aus der vorstehenden Beschreibung ergibt, kann der Gasdruckregler rein mechanisch sein. Insbesondere kann die Sicherheitseinrichtung rein mechanisch sein. Mit anderen Worten kann der Gasdruckregler ohne eine elektrisch gesteuerte Sicherheitseinrichtung, etwa ohne ein elektrisch gesteuertes Ventil, ausgebildet sein. Der Gasdruckregler kann ohne einen elektrischen Beschleunigungssensor ausgebildet sein und/oder muss nicht mit einem Beschleunigungssensors des jeweiligen Fahrzeugs elektrisch oder über Funk verbunden werden, was ebenfalls den Einbau des erfindungsgemäßen Gasdruckreglers weiter erleichtern kann.

Vorzugsweise beträgt ein Gasdruck einer Gasflasche, mit der der Gasdruckregler verbunden wird 0,3 bis 16 bar. Mit anderen Worten ist der Gasdruckregler vorzugsweise ausgelegt, einen am Gaseinlass anliegenden Druck von 0,3 bis 16 bar zu regulieren und/oder zu reduzieren, vorzugsweise 3 bis 6 bar.

Vorzugsweise beträgt ein Gasdruck einer Gasflasche, mit der der Gasdruckregler verbunden wird, 20 bar oder weniger, weiter bevorzugt 16 bar oder weniger, weiter bevorzugt 10 bar oder weniger. Mit anderen Worten ist der Gasdruckregler vorzugsweise ausgelegt, einen am Gaseinlass anliegenden Druck höchstens 20 bar, weiter bevorzugt höchstens 16 bar, weiter bevorzugt höchstens 10 bar zu regulieren und/oder zu reduzieren.

Vorzugsweise beträgt ein Gasdruck am Gasauslass des Gasdruckreglers höchstens 500 mbar, weiter bevorzugt höchstens 300 mbar, weiter bevorzugt höchstens 100 mbar, weiter bevorzugt höchstens 50 mbar. Mit anderen Worten ist der Gasdruckregler vorzugsweise ausgelegt, einen am Gaseinlass anliegenden Druck auf höchstens 500 mbar, weiter bevorzugt höchstens 300 mbar zu reduzieren.

Unter dem Betriff Gas ist im Rahmen der vorliegenden Offenbarung insbesondere ein Stoff zu verstehen, der als Flüssiggas in einer Gasflasche bereitgestellt wird. Unter einem "Flüssiggas" sind hierbei im Allgemeinen Gase aus kurzkettigen Kohlenwasserstoffen wie beispielsweise Propan und Butan sowie deren Gemische zu verstehen, die bei Raumtemperatur (20° C) und geringer Kompression (z.B. < 10 bar) flüssig bleiben. Flüssiggas kann neben Propan und Butan unter anderem auch Propen, Buten, Isobutan und/oder Isobuten sein oder enthalten. Das Flüssiggas kann ein brennbares Gas sein.

Soweit der Begriff "Flüssiggas" verwendet wird, schließt dies daher den Fall ein, dass das Flüssiggas in dem gasförmigen Zustand vorliegt und/oder in diesen übergegangen ist (z.B. indem es ausgehend von einer Flüssiggas-Gasflasche durch einen erfindungsgemäßen Gasdruckregler geleitet wurde). Der Betriff "Flüssiggas" erfordert nicht, dass das Flüssiggas bei Standardbedingungen (20° C Raumtemperatur und Druck von 1 bar) flüssig ist. Flüssiggas kann bei diesen Standardbedingungen auch gasförmig sein, was insbesondere bei Propan und Butan der Fall ist.

Der Begriff "Druck" kann im Rahmen der vorliegenden Offenbarung, sofern nicht explizit anders angegeben, den Gasdruck des Flüssiggases bezeichnen.

Gemäß einem zweiten Aspekt der vorliegenden Erfindung, mit dem der oben beschriebene Gasdruckregler ebenfalls in Merkmalen umrissen werden kann, bezieht sich die Erfindung auf einen Gasdruckregler, z.B. Druckminderer, der aufweist: ein Gehäuse; einen Gaseinlass; einen Gasauslass; eine Membran, wobei zwischen dem Gehäuse und der Membran ein gasführender Bereich des Gasdruckreglers ausgebildet ist, durch den Gas vom Gaseinlass zum Gasauslass strömen kann; einen Ventilhebel, der im gasführenden Bereich zwischen dem Gaseinlass und dem Gasauslass angeordnet ist, wobei der Ventilhebel zwischen einer geschlossenen Stellung, in der ein Durchfluss vom Gaseinlass zum Gasauslass geschlossen ist, und einer offenen Stellung, in der der Gaseinlass geöffnet ist, bewegbar ist, und wobei der Ventilhebel derart mit der Membran gekoppelt ist, dass eine Auslenkung der Membran in eine Bewegung des Ventilhebels überführbar ist; eine Sicherheitseinrichtung, die mit dem Ventilhebel gekoppelt ist und dazu ausgebildet ist, bei Überschreiten einer vorbestimmten Beschleunigung den Ventilhebel in die geschlossene Stellung zu überführen und/oder in der geschlossenen Stellung zu halten.

Wie der Fachmann erkennen wird, sind alle oben für den ersten Aspekt beschriebenen Merkmale des Gasdruckreglers ebenfalls auf den Gasdruckregler gemäß dem zweiten Aspekt anwendbar.

So weist die Sicherheitseinrichtung vorzugsweise einen Trägheitskörper auf, der dazu ausgebildet ist, bei Überschreiten der vorbestimmten Beschleunigung durch eine auftretende Beschleunigungskraft von einer Ruheposition in eine ausgelenkte Position bewegt zu werden. Der Trägheitskörper ist vorzugsweise im gasführenden Bereich angeordnet.

Der Trägheitskörper ist vorzugsweise mit einem Mechanismus, vorzugsweise einem Schieber, gekoppelt, wobei in der Ruheposition des Trägheitskörpers eine Bewegung des Mechanismus in eine Schließrichtung gesperrt ist und in der ausgelenkten Position des Trägheitskörpers eine Bewegung des Mechanismus in Schließrichtung freigegeben ist. Vorzugsweise wird der Ventilhebel in der ausgelenkten Position des Trägheitskörpers durch die Bewegung des Mechanismus, vorzugsweise des Schiebers, in die geschlossenen Stellung überführt und/oder in der geschlossenen Stellung gehalten.

Vorzugsweise ist der Schieber im Sicherheitsfall derart mit dem Ventilhebel gekoppelt und/oder wirkt auf diesen, dass der Ventilhebel in die geschlossene Stellung bewegbar ist und/oder in der geschlossenen Stellung gehalten wird, vorzugsweise unabhängig von einer Bewegung der Hebelöse in die geschlossene Stellung.

Der Gasdruckregler weist vorzugsweise die oben näher beschriebene Hebelöse auf, die mit der Membran und dem Ventilhebel derart verbunden ist, dass eine Bewegung der Membran durch die Hebelöse von der Membran auf den Ventilhebel übertragen wird.

Der Gasdruckregler weist vorzugsweise ferner eine Stellfeder auf, die mit der Membran verbunden und dazu ausgebildet ist, die Membran mit einer vorbestimmten Vorspannkraft vorzuspannen. Die Stellfeder ist vorzugsweise außerhalb des gasführenden Bereichs angeordnet.

Gemäß einem weiteren Aspekt betrifft die vorliegende Erfindung ein Leitungssystem mit einer Gasflasche und einem Gasdruckregler gemäß einem der oben beschriebenen Aspekte.

Gemäß einem weiteren Aspekt betrifft die vorliegende Erfindung einen Van oder Camper mit einem Gasdruckregler gemäß einem der oben beschriebenen Aspekte. Gemäß einem weiteren Aspekt betrifft die vorliegende Erfindung einen Van oder Camper mit einem Leitungssystem gemäß dem obigen Aspekt.

### Kurzbeschreibung der Figuren

**Figur 1** ist eine schematische Schnittansicht eines Ausführungsbeispiels eines erfindungsgemäßen Gasdruckreglers mit geöffnetem Ventilhebel und betriebsbereiter bzw. aktivierter (nicht ausgelöster) Sicherheitseinrichtung.
**Figur 2** ist eine schematische Schnittansicht des Gasdruckreglers von **Figur 1** mit geschlossenem Ventilhebel und betriebsbereiter (nicht ausgelöster) Sicherheitsvorrichtung.
**Figur 3** ist eine perspektive Ansicht des Gasdruckreglers von **Figur 1****,** wobei zur besseren Verständlichkeit die Stellfeder und die Membran ausgeblendet sind.
**Figur 4** zeigt eine schematische Schnittansicht des Gasdruckreglers von **Figur 3** mit betriebsbereiter (nicht ausgelöster) Sicherheitseinrichtung.
**Figur 5** zeigt den Gasdruckregler von **Figur 4** mit ausgelöster Sicherheitseinrichtung.
**Figur 6** zeigt eine weitere schematische Schnittansicht des Gasdruckreglers von **Figur 3** mit betriebsbereiter (nicht ausgelöster) Sicherheitseinrichtung.
**Figur 7** zeigt den Gasdruckregler von **Figur 6** mit ausgelöster Sicherheitseinrichtung.

### Detaillierte Beschreibung

Innerhalb der Figuren bezeichnen gleiche Bezugszeichen gleiche Gegenstände oder Komponenten.

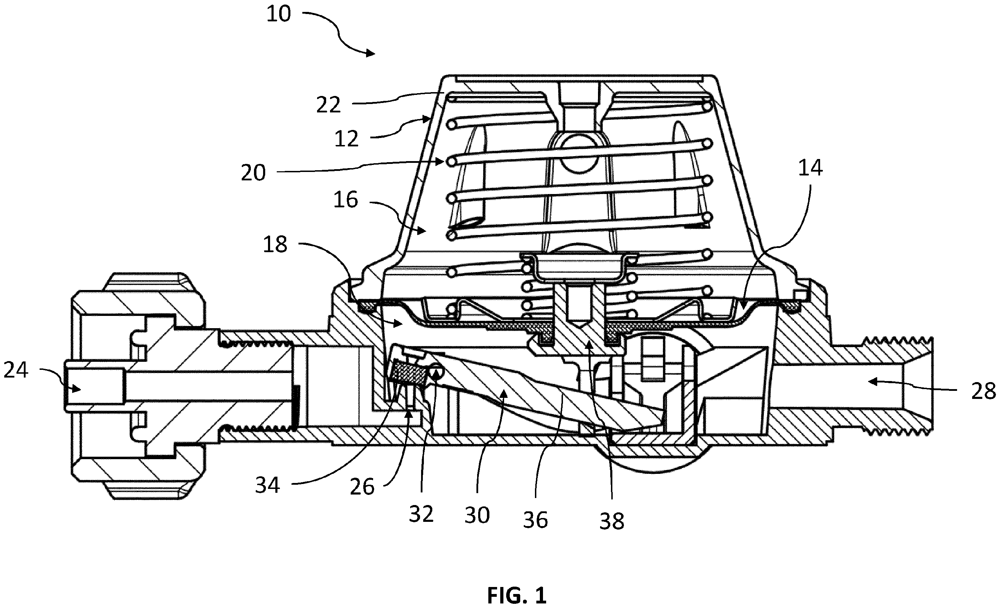

**Figur 1** zeigt eine Ausführungsform eines erfindungsgemäßen Gasdruckreglers 10. Der Gasdruckregler kann als Druckminderer ausgebildet sein, der zum Einstellen und/oder Regeln eines Gasdrucks in einem Schlauch- und/oder Leitungssystem verwendet wird. Der Gasdruckregler 10 kann insbesondere in Campern und/oder Vans zum Einsatz kommen, die über ein Gasleitungssystem verfügen. Beispielsweise kann der Camper und/oder Van über eine gasbetriebene Heizung und/oder gasbetriebene Kochstelle verfügen. Der Camper und/oder Van kann eine Gasdruckflasche aufweisen, an die der Gasdruckregler 10 anschraubbar ist.

Der Gasdruckregler 10 weist ein Gehäuse 12 und eine in dem Gehäuse 12 angeordnete Membran (Stellmembran oder Regelmembran) 14 auf. Die Membran 14 unterteil das Gehäuse 12 in einen ersten Gehäusebereich 16 und in einen zweiten Gehäusebereich 18. Der erste Gehäusebereich 16 ist ein gegenüber einer Umgebung des Gehäuses 12 offener Gehäusebereich, sodass eine erste Seite der Membran 20 (im konkreten Beispiel von **Figur 1** die Oberseite) mit atmosphärischem Luftdruck beaufschlagt ist. Der zweite Gehäusebereich 18 ist ein mit Gas beaufschlagbarer Gehäusebereich, sodass eine der ersten Seite gegenüberliegende zweite Seite der Membran 14 (im konkreten Beispiel von **Figur 1** die Unterseite) mit einem gegenüber dem atmosphärischen Luftdruck erhöhten Gasdruck beaufschlagbar ist.

In dem Gehäuse 12 ist eine Stellfeder (Regelfeder) 20, die vorzugsweise als Spiralfeder ausgebildet ist, angeordnet. Die Stellfeder 20 ist mit der Membran 14 verbunden und übt eine vorbestimmte Vorspannkraft auf die Membran 14 aus. Die Stellfeder 20 stützt sich mit einer Seite an einem Gehäuseteil 22 und stützt sich mit der anderen Seite an der Membran 20 ab. Die Federkraft der Stellfeder 20 bestimmt die auf die Membran 20 einwirkende Vorspannkraft.

Der Gasdruckregler 10 weist einen in dem zweiten Gehäusebereich 18 angeordneten Gaseinlass 24 auf. Der Gaseinlass 24 weist eine Düse 26 auf. Der Gaseinlass 24 kann an eine Flüssiggasflasche angeschlossen werden. Das unter Druck stehende Gas der Gasflasche tritt an der Düse 26 in den zweiten Gehäusebereich 18 ein.

Der Gasdruckregler 10 weist einen in dem zweiten Gehäusebereich 18 angeordneten Gasauslass 28 auf.

Ein in dem zweiten Gehäusebereich 18 angeordneter Ventilhebel 30 ist strömungsmäßig zwischen dem Gaseinlass 24 und dem Gasauslass 28 angeordnet. Der Ventilhebel 30 ist zwischen einer offenen und einer geschlossenen Stellung bewegbar. In der offenen Stellung, die in **Figur 1** gezeigt ist, ist der Gaseinlass 24 geöffnet, sodass Gas aus der Düse 26 in den zweiten Gehäusebereich 18 eintreten kann. In der geschlossenen Stellung ist der Gaseinlass 24 geschlossen bzw. ein Durchfluss von Gas durch den Gasdruckregler 10 unterbunden.

Im konkreten Beispiel von **Figur 1** ist der Ventilhebel 30 als (erster) Kipphebel ausgebildet und um eine (erste) Kippachse 32 kippbar. Eine erste Ventilhebelseite 34 ist auf einer ersten Seite der Kippachse 32 angeordnet. Eine zweite Ventilhebelseite 36 ist auf einer der ersten Seite gegenüberliegenden zweiten Seite der Kippachse 32 angeordnet. Der Ventilhebel 30 kann derart ausgebildet sind, dass der Ventilhebel 30 selbsttätig in die offene Stellung kippt. Beispielsweise kann die zweite Ventilhebelseite 36 länger sein als die erste Ventilhebelseite 34, sodass die Schwerkraft bzw. Gewichtskraft ein Kippen des Ventilhebels 30 in die offene Stellung bewirkt. Alternativ oder zusätzlich kann mindestens eine Feder (in den Figuren nicht gezeigt), z.B. eine Schraubenfeder vorgesehen sein, die den Ventilhebel in die offene Stellung drückt und/oder vorspannt. Weiter alternativ oder zusätzlich kann der Ventilhebel durch den an der ersten Ventilhebelseite anliegenden höheren Gasdruck in die offene Stellung gedrückt werden (und/oder der Gasdruck kann die Bewegung des Ventilhebels in die offene Stellung zumindest unterstützen).

Der Gasdruckregler 10 weist ferner eine Hebelöse 38 auf. Die Hebelöse 38 ist mit der Membran 14 verbunden. Wenn sich die Membran 14 beispielsweise aufgrund eines Druckunterschieds zwischen dem ersten Gehäusebereich 16 und dem zweiten Gehäusebereich 18 in eine Richtung nach oben (hin zum ersten Gehäusebereich 16) oder nach unten (hin zum zweiten Gehäusebereich 18) auslenkt, hat das eine korrespondierende Bewegung der Hebelöse nach oben bzw. unten zur Folge. Mit anderen Worten kann sich die Hebelöse 38 je nach Druckunterschied nach oben oder unten bewegen.

Die Hebelöse 38 ist zudem mit dem Ventilhebel 30 derart verbunden, dass ein auf die Membran 14 einwirkender Druckunterschied zwischen dem ersten Gehäusebereich 16 und dem zweiten Gehäusebereich 18 in eine Bewegung des Ventilhebels 30 überführbar ist.

Mit der Bezeichnung "überführbar" soll zum Ausdruck gebracht werden, dass eine Bewegung der Hebelöse 38 nicht notwendigerweise in einer korrespondierenden Bewegung des Ventilhebels 30 resultiert, sondern es durchaus möglich ist, dass der Ventilhebel 30 unabhängig von einer Bewegung der Hebelöse 38 bewegbar ist. Z.B. kann die Hebelöse so mit dem Ventilhebel gekoppelt sein, dass eine Bewegung der Hebelöse in Schließrichtung auf den Ventilhebel überführt wird, wenn der Ventilhebel in der offenen Stellung ist. Gleichzeitig kann der Ventilhebel unabhängig von der Bewegung der Hebelöse (durch die Sicherheitseinrichtung) von der offenen in die geschlossene Stellung bewegt werden.

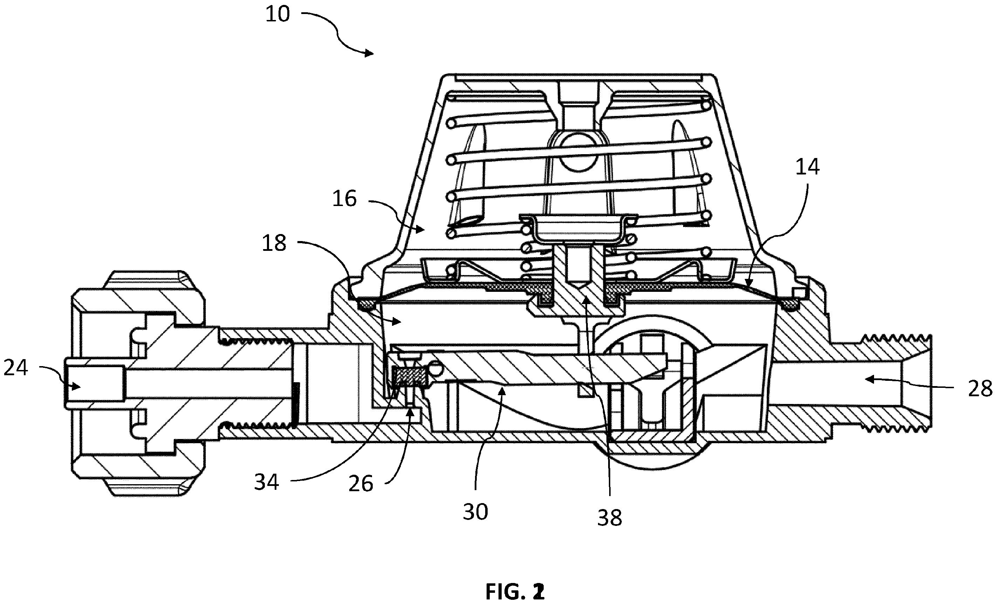

Es sei auf **Figur 2** verwiesen, in der der Gasdruckregler 10 von **Figur 1** gezeigt ist, wobei in **Figur 2** der Ventilhebel 30 des Gasdruckreglers 10 in der geschlossenen Stellung ist. In **Figur 2** hat ein in dem zweiten Gehäusebereich 18 vorhandener Druckunterschied gegenüber dem atmosphärischen Luftdruck im ersten Gehäusebereich 16 dazu geführt, dass sich die Membran 14 in Richtung des ersten Gehäusebereichs 16 auslenkt. Dies hat zur Folge, dass sich die Hebelöse 38 in Richtung des ersten Gehäusebereichs (im konkreten Beispiel nach oben) bewegt. Durch die Bewegung der Hebelöse 38 nach oben wird der Ventilhebel 30 in die geschlossene Stellung bewegt. Ein Ende der ersten Ventilhebelseite 34 verschließt die Düse 26 und damit den Gaseinlass 24, sodass ein Gasdurchfluss durch den Druckminderer 10 unterbrochen ist.

Die Schaltstellungen, die in Zusammenhang mit **Figuren 1** **und** **2** beschrieben sind, entsprechen den üblichen von dem Ventilhebel 30 im Rahmen der Regelfunktion des Gasdruckreglers 10 eingenommen Stellungen. Die Regelung und die damit verbundene Bewegung des Ventilhebels 30 zwischen der offenen und geschlossenen Stellung erfolgt so lange, bis sich am Gasauslass 28 der gewünschte Ausgangsdruck einstellt bzw. so lange der Ausgangsdruck gehalten werden soll.

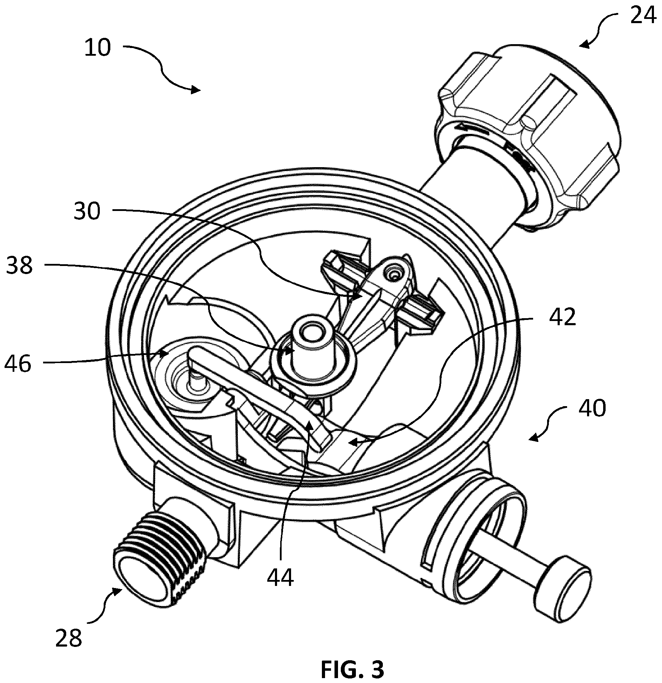

Es sei nun auf **Figur 3** verwiesen, in der der Gasdruckregler 10 von **Figuren 1** **und** **2** in einer perspektivischen Ansicht gezeigt ist. In **Figur 3** sind aus Gründen der einfacheren Darstellung der obere Gehäuseteil, die Stellfeder und die Membran nicht gezeigt.

**Figur 3** zeigt den Ventilhebel 30, die Hebelöse 38, den Gaseinlass 24 und den Gasauslass 28. Wie zu erkennen ist, weist der Gasdruckregler 10 zudem eine integrierte Sicherheitseinrichtung 40 auf. In **Figur 3** ist die Sicherheitseinrichtung 40 in der betriebsbereiten bzw. der nicht ausgelösten Stellung gezeigt.

Die Sicherheitseinrichtung 40 ist dazu ausgebildet, bei Überschreiten einer vorbestimmten Beschleunigung, wie beispielsweise im Fall eines Crashs des Campers und/oder Vans, den Gaseinlass 24 zu schließen. Im konkreten Beispiel von **Figur 3** befindet sich die Sicherheitseinrichtung 40 im zweiten Gehäusebereich 18, also in dem mit Gas beaufschlagbaren Gehäusebereich. Das ist derselbe Gehäusebereich, in dem auch der Ventilhebel 30 angeordnet ist.

Die Sicherheitseinrichtung 40 weist einen Schieber 42 auf, der im Crash-Fall auf den Ventilhebel 30 derart einwirkt, dass dieser unabhängig von der Bewegung der Hebelöse 38 in die geschlossene Stellung bewegbar ist. Die Sicherheitseinrichtung 40 weist ferner eine Sperrklinke 44 auf, die eine Bewegung des Schiebers 42 in Schließrichtung sperrt, solange die vorbestimmte Beschleunigung nicht überschritten ist. Ein Trägheitskörper 46 der Sicherheitseinrichtung 40 ist dazu ausgebildet, bei Überschreiten der vorbestimmten Beschleunigung durch eine auftretende Beschleunigungskraft von einer Ruheposition in eine ausgelenkte Position bewegt zu werden. In **Figur 3** ist die Ruheposition gezeigt. In der Ruheposition stützt sich die Sperrklinke 44 an dem Trägheitskörper 46 ab, sodass die Sperrklinke 44 eine Bewegung des Schiebers 42 in Schließrichtung sperrt. In der ausgelenkten Position ist eine Bewegung des Schiebers 42 in Schließrichtung freigegeben, sodass der Schieber 42 den Ventilhebel 30 in die geschlossene Stellung bewegen und den Gaseinlass 24 schließen kann.

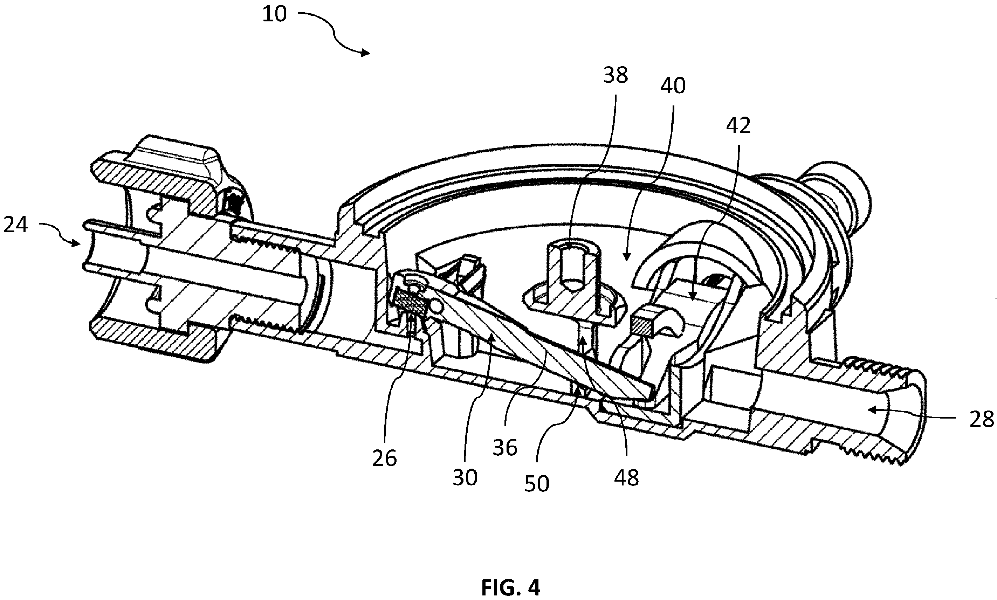

Die Funktionsweise der Sicherheitseinrichtung 40 wird in Zusammenhang mit **Figuren 4 bis 7** näher erklärt.

**Figur 4** zeigt eine Schnittansicht des Gasdruckreglers 5. Die Schnittansicht verläuft mittig durch den Gaseinlass 24 bzw. Gasauslass 28. In **Figur 4** ist der Ventilhebel 30 in der offenen Stellung und ist die Sicherheitseinrichtung 40 in der betriebsbereiten Stellung bzw. in der nicht ausgelösten Stellung gezeigt.

Wie zu erkennen ist, weist die Hebelöse 38 ein Langloch 48 auf. Das Langloch 48 kann als Öffnung ausgeführt sein, die eine Verlängerung bzw. Erweiterung in Richtung einer Längserstreckungsachse der Hebelöse 38 aufweist. Der Ventilhebel 30 kontaktiert in der offenen Stellung mit seiner zweiten Ventilhebelseite 36 bzw. einem dem Gaseinlass 24 fernen Ende eine Anlagefläche 50 des Langlochs 48. Das dem Gaseinlass 24 ferne Ende kann in dem Langloch 48 bzw. in der Öffnung geführt sein. Die Anlagefläche 50 kann eine untere, von der Membran am weitesten entfernte Mantelfläche des Langlochs bzw. der Bohrung sein.

Wie vorstehend erwähnt, kann der Ventilhebel 30 kann so ausgebildet sein, dass er selbsttätig in die offene Stellung kippt. Ein durch die Düse 26 einströmendes Gas kann den Ventilhebel 30 zudem in die offene Stellung bewegen und/oder eine Bewegung dorthin unterstützen und bewirken, dass die zweite Ventilhebelseite 36 an der Anlagefläche 50 anliegt. Alternativ oder zusätzlich kann eine Feder (nicht gezeigt) verwendet werden, um den Ventilhebel in die offene Stellung vorzuspannen.

Der Schieber 42 der Sicherheitseinrichtung 40 ist im Beispiel von **Figur 4** in einer zurückgezogenen Stellung. In dieser Stellung wirkt der Schieber 42 nicht auf eine Bewegung des Ventilhebels 30. Mit anderen Worten könnte die Hebelöse 38 durch eine Aufwärtsbewegung, wie sie im Rahmen der normalen Regelung erfolgen würden (vergleiche die Beschreibung zu **Figuren 1** **und** **2**), den Ventilhebel 30 in die geschlossene Stellung bewegen, sodass der Gaseinlass 24 geschlossen ist.

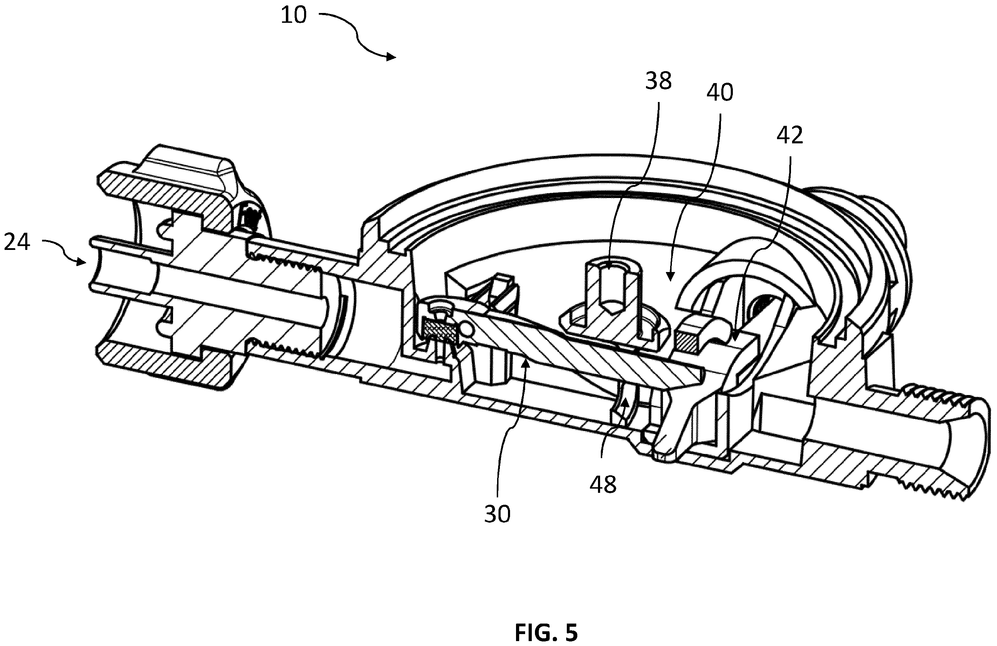

Es sei auf **Figur 5** verwiesen, in der der Gasdruckregler 10 in derselben Schnittansicht wie in **Figur 4** gezeigt ist. Allerdings ist in **Figur 5** die Sicherheitseinrichtung 40 in der ausgelösten Stellung gezeigt. Mit anderen Worten hat in der in **Figur 5** gezeigten Schnittansicht die Sicherheitseinrichtung 40 ausgelöst, beispielsweise weil es zu einem Crash des Vans bzw. Campers gekommen ist.

In der ausgelösten Stellung hat der Schieber 42 derart auf den Ventilhebel 30 eingewirkt, dass dieser unabhängig von einer Bewegung der Hebelöse 38 in die geschlossen Stellung bewegt wurde. Dies wurde dadurch erreicht, dass das dem Gaseinlass 24 ferne Ende des Ventilhebels 30 in dem Langloch 48 von einer offenen Stellung in eine geschlossene Stellung bewegbar ist, ohne dazu die Hebelöse 38 bewegen zu müssen. Das Langloch 48 bzw. die Verlängerung der Öffnung in Richtung Membran ist so dimensioniert, dass der Ventilhebel 30 unabhängig von einer Bewegung der Hebelöse 38 in die geschlossene Stellung bringbar ist. Die Bewegung des Schiebers 42 erfolgt unabhängig von der Bewegung der Hebelöse 38 und/oder einer (Stell-)Bewegung der Membran. In der ausgelösten Stellung der Sicherheitseinrichtung 40 ist der Gaseinlass 24 geschlossen, sodass ein Gasdurchfluss durch den Gasdruckregler 10 unterbrochen ist.

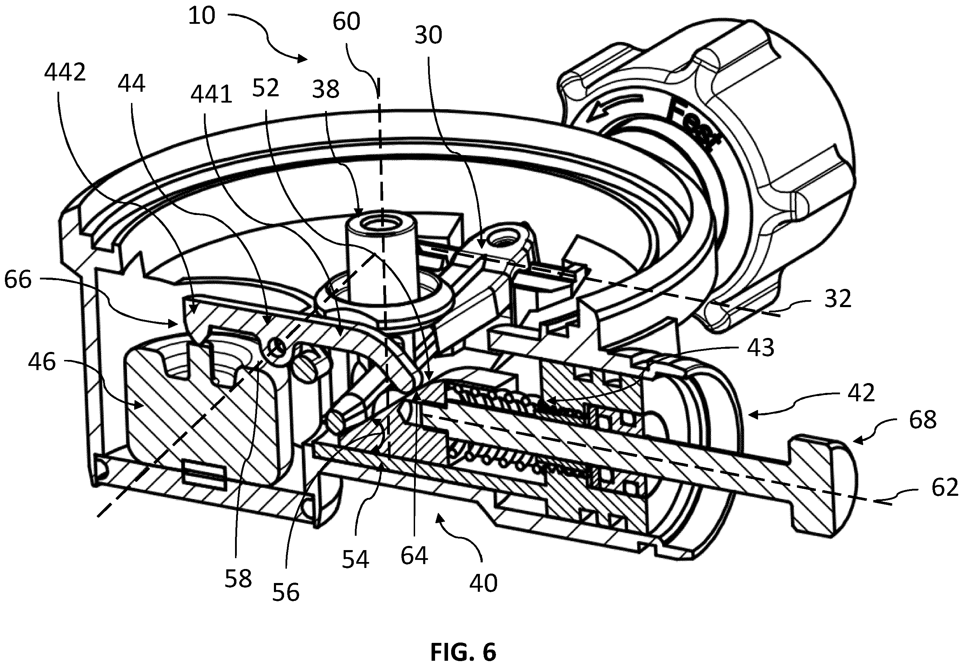

**Figur 6** zeigt den Gasdruckregler 10 in einer weiteren Schnittansicht. Die weitere Schnittansicht verläuft mittig entlang einer Längserstreckungsrichtung des Schiebers 42. In **Figur 6** ist der Ventilhebel 30 in der offenen Stellung und die Sicherheitseinrichtung 40 in der betriebsbereiten Stellung bzw. in der nicht ausgelösten Stellung gezeigt.

Der Schieber 42 weist eine, vorzugsweise schräg verlaufende, Betätigungsfläche 52 auf. Die Betätigungsfläche 52 ist dazu ausgebildet, bei einer Bewegung des Schiebers 42 in Schließrichtung den Ventilhebel 30 von der offenen in die geschlossene Stellung zu bewegen. Im konkreten Beispiel weist der Schieber 42 eine Führungsfläche 54 auf. Diese Führungsfläche 54 wird an einer Gehäuseinnenseite geführt und nimmt mit der Betätigungsfläche 52 einen spitzen Winkel 56 ein, der in einem Bereich von 10° bis 60°, vorzugsweise in einem Bereich von 20° bis 45°, liegen kann.

Wie zu erkennen ist, ist der Schieber 42 in Schließrichtung vorgespannt. Im konkreten Beispiel von **Figur 6** erfolgt die Vorspannung mittels einer Feder 43, insbesondere einer Schraubenfeder, die sich am Gehäuse 12 abstützt und um einen Abschnitt des Schiebers 42 angeordnet ist.

Die Sperrklinke 44 sperrt in der Sperrstellung die Bewegung des Schiebers 42 in Schließrichtung. Die Sperrklinke 44 ist als (zweiter) Kipphebel ausgebildet und um eine (zweite) Kippachse 58 kippbar. In der Sperrstellung stützt sich die Sperrklinke 44 mit einer ersten Sperrklinkenseite 441 an der schräg verlaufenden Betätigungsfläche 52 ab und mit einer zweiten Sperrklinkenseite 442 an dem Trägheitskörper 46. Mit anderen Worten sperrt die zweite Sperrklinkenseite 442 eine Bewegung des Schiebers 42 in Schließrichtung.

Im konkreten Beispiel von **Figur 6** ist die zweite Kippachse 58 in einem Winkel zur ersten Kippachse 32 des Ventilhebels 30 angeordnet, wobei der Winkel im dreidimensionalen Raum vorliegen kann und in einem Bereich von 80° bis 100°, vorzugsweise in einem Bereich von 85° bis 95°, weiter vorzugsweise 90°, sein kann.

Ferner kann sich die Hebelöse 38 entlang einer ersten Achse 60 erstrecken bzw. bewegen und kann sich der Schieber 42 entlang einer zweiten Achse 62 erstrecken bzw. bewegen, insbesondere verschieben. Die beiden Achsen 60, 62 können einen Winkel im dreidimensionalen Raum einnehmen, der in einem Bereich von 80° bis 100°, vorzugsweise in einem Bereich von 85° bis 95°, weiter vorzugsweise 90°, liegen kann.

Weiter kann die zweite Achse 62 in einem Winkel zur zweiten Kippachse 58 angeordnet sein, wobei der Winkel im dreidimensionalen Raum vorliegen kann und in einem Bereich von 80° bis 100°, vorzugsweise in einem Bereich von 85° bis 95°, weiter vorzugsweise 90°, liegen kann.

Die erste Kippachse 32 des Ventilhebels und die zweite Achse des Schiebers 42 können parallel zueinander verlaufen.

Die Achsen 32, 58, 60 und 62 können so angeordnet sein, dass die Sicherheitseinrichtung 40 möglichst kompakt ist.

Die zweite Kippachse 58 kann beispielsweise senkrecht zur ersten Kippachse 32 des Ventilhebels 30, senkrecht zur ersten Achse 60 der Hebelöse 38 und/oder senkrecht zur zweiten Achse 62 des Schiebers 42 angeordnet sein.

In **Figur 6** ist der Trägheitskörper 46 in der Ruheposition gezeigt. In der Ruheposition des Trägheitskörpers 46 ist eine Bewegung des Schiebers 42 in Schließrichtung gesperrt. In der Ruheposition des Trägheitskörpers 46 kontaktiert die Sperrklinke 44 mit einem ersten Ende 64 die schräg verlaufende Betätigungsfläche 54 des Schiebers 42 und mit einem zweiten Ende 66 den Trägheitskörper 46. Durch die Kontaktierung des Trägheitskörpers 46 ist die Sperrklinke 44 in der Sperrstellung eingerastet und sperrt die Sperrklinke 44 eine Bewegung des Schiebers 42 in Schließrichtung.

Im konkreten Beispiel ist der Trägheitskörper 46 ein flächig aufliegender Trägheitskörper und kontaktiert die Sperrklinke 44 mit ihrem ersten Ende den Trägheitskörper 46 auf einer Oberseite. In anderen Ausführungsbeispielen kann der Trägheitskörper 46 eine Kugel sein, die in der Ruheposition von oben von der Sperrklinke 44 kontaktiert wird.

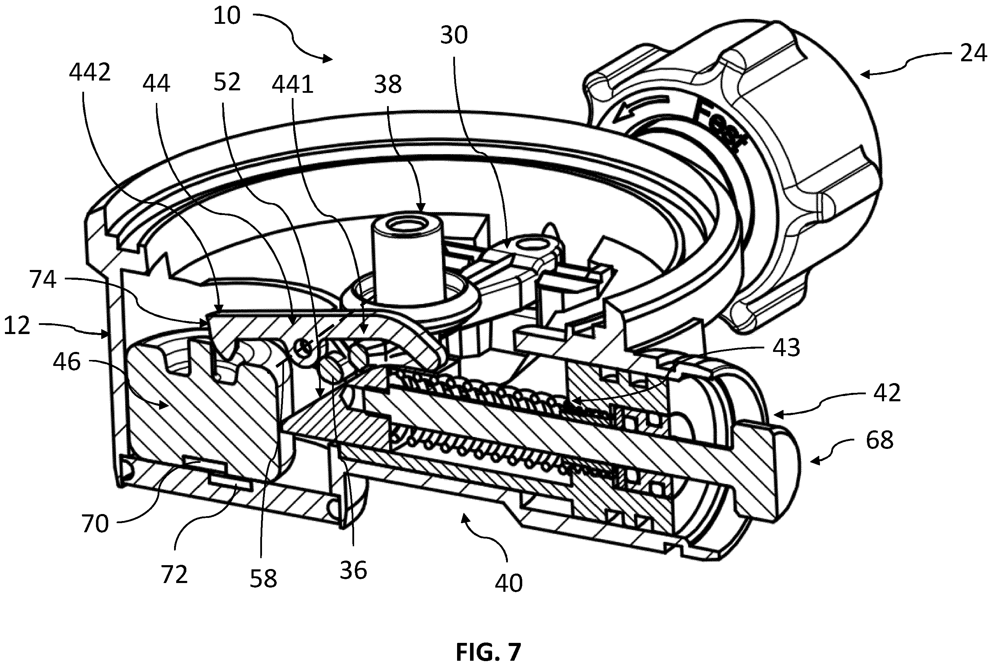

Wie in **Figur 6** gezeigt ist, kann der Schieber 42 eine Betätigungseinheit 68 aufweisen, die angibt, ob die Sicherheitseinrichtung 40 ausgelöst hat. Im konkreten Beispiel von **Figur 6** ragt die Betätigungseinheit 68 durch das Gehäuse nach außen und ist für einen Benutzer des Gasdruckreglers 10 sichtbar. Insbesondere ragt die Betätigungseinheit 68 weiter aus dem Gehäuse heraus wie im Fall einer ausgelösten Sicherheitseinrichtung 40 (vergleiche hierzu **Figur 7**)**,** sodass der Benutzer des Gasdruckreglers auf Anhieb erkennen kann, ob die Sicherheitseinrichtung 40 ausgelöst hat oder nicht.

Es sei nun auf **Figur 7** verwiesen, in der der Gasdruckregler 10 in derselben Schnittansicht wie **Figur 6** gezeigt ist, jedoch mit ausgelöster Sicherheitseinrichtung 40.

Im ausgelösten Zustand der Sicherheitseinrichtung 40 hat sich der Trägheitskörper 46 aufgrund der auftretenden Beschleunigungskraft von der Ruheposition in die ausgelenkte Position bewegt. In der ausgelenkten Position ist eine Bewegung der Sperrklinke 44 von der Sperrstellung (siehe **Figur 6**) in eine Freigabestellung (siehe **Figur 7**) freigegeben.

Die Sperrklinke 44 kann beispielsweise um die (zweite) Kippachse 58 von der Sperrstellung in die Freigabestellung kippen, da der Trägheitskörper 46 in die ausgelenkte Position bewegt wurde und nicht länger unterhalb der Sperrklinke 44 eingeklemmt ist. Indem die Sperrklinke 44 in die Freigabestellung kippt, kann die Sperrklinke eine Bewegung des Schiebers 42 in Schließrichtung nicht mehr sperren. Der Schieber 42 kann sich in Schließrichtung bewegen. Die Vorspannkraft der Feder 43 kann den Schieber 42 in Schließrichtung bewegen, sodass die Betätigungsfläche 52 den Ventilhebel 30 von der offenen Stellung in die geschlossene Stellung bewegen und dadurch den Gaseinlass 24 schließen kann.

In der Freigabestellung der Sperrklinke 44 bzw. bei ausgelöster Sicherheitseinrichtung 40 kann das zweite Ende der Sperrklinke 44 in eine Nut 70 des Trägheitskörpers 46 einrasten.

Der Trägheitskörper 46 kann in der ausgelenkten Position an einer Gehäuseinnenseite anliegen. Die Gehäuseinnenseite kann als Anschlag bzw. Anlagefläche für den ausgelenkten Trägheitskörper 46 dienen.

Der Schieber 42 kann an einem im Gehäuse 12 vorhandenen Anschlag anliegen. Der Anschlag kann eine Stufe im Gehäuse 12 sein und kann eine Bewegung des Schiebers 42 in Schließrichtung begrenzen. Alternativ kann sich der Schieber 42 so lange in Schließrichtung bewegen, bis er seitlich an dem Trägheitskörper 46 anliegt.

Im ausgelösten Zustand der Sicherheitseinrichtung 40 kann die Betätigungseinheit 68 weniger weit aus dem Gehäuse 12 stehen als im betriebsbereiten (nicht ausgelösten) Zustand (vergleiche hierzu **Figur 6**)**.**

Wenn der Schieber 42 den Ventilhebel 30 in die geschlossene Stellung bewegt hat, verhindert der Schieber 42, dass die Sperrklinke 44 in die Sperrstellung zurückkehren kann. Beispielsweise kann der der Schieber 42 die zweite Ventilhebelseite 36 von unten gegen die Sperrklinke 44 drücken, sodass eine Rückbewegung der Sperrklinke 44 von der Freigabestellung in die Sperrstellung blockiert wird.

Die Sicherheitseinrichtung 40 weist einen Rückholmechanismus auf, der eine Rückholung des ausgelenkten Trägheitskörpers 46 ermöglicht. Der Rückholmechanismus kann beispielsweise eine Vertiefung aufweisen, wobei der ausgelenkte Trägheitskörper 46 aufgrund der Schwerkraft in eine energetisch günstigere Position innerhalb der Vertiefung zurückkehrt. Andere Rückholmechanismen sind denkbar.

Im gezeigten Beispiel ist der Rückholmechanismus ein magnetischer Rückholmechanismus. Beispielsweise kann der Trägheitskörper 46 ein ferromagnetisches Material aufweisen und kann das Gehäuse 12 einen Magneten aufweisen, der auf den auslenkten Trägheitskörper 46 eine rückholende Magnetkraft ausübt. Alternativ oder zusätzlich kann der Trägheitskörper 46, wie in **Figur 7** angedeutet, einen ersten Magneten 70 aufweisen und kann das Gehäuse 12 einen zweiten Magneten 72 aufweisen, wobei beide Magneten 70, 72 derart ausgewählt sind, dass eine rückholende Magnetkraft auf den ausgelenkten Trägheitskörper 46 ausgeübt wird.

Eine Rückholung des ausgelenkten Trägheitskörpers 46 kann so lange unterbunden werden, bis der Schieber 42 in seine geöffnete Stellung zurückgezogen wurde. Das Zurückziehen kann durch die Betätigungseinheit 68 erfolgen.

Wie in **Figur 7** gezeigt ist, kann bei ausgelöster Sicherheitseinrichtung 40 der sich in Schließrichtung bewegte Schieber 42 seitlich an dem Trägheitskörper 46 anliegen. Die Vorspannkraft der Feder 43 kann stärker sein als eine auf den Trägheitskörper 46 wirkende magnetische Rückholkraft, sodass eine Rückholung des Trägheitskörpers 46 bei ausgelöster Sicherheitseinrichtung 40 nicht möglich ist.

Durch Zurückziehen des Schiebers 42 in seine geöffnete Stellung ist es möglich, dass der Trägheitskörper 46 von der ausgelenkten Position in die Ruheposition zurückkehren kann, beispielsweise aufgrund der auf ihn ausgeübten magnetischen Rückholkraft.

Beim Zurückbewegen in die Ruheposition kann der Trägheitskörper 46 eine Kontaktfläche 74 der Sperrklinke 44 kontaktieren. Die Kontaktfläche 74 kann so ausgebildet sein, dass bei der Rückholung des Trägheitskörpers 46 die Sperrklinke 44 von der Freigabestellung (siehe **Figur 7**) in die Sperrstellung (siehe **Figur 6**) gedreht wird oder diese Drehung zumindest unterstützt wird.

Die Sperrklinke 44 kann alternativ oder zusätzlich so ausgebildet sein, dass sie selbsttätig in die Sperrstellung kippt, sobald dies durch den zurückgezogenen Schieber 42 möglich ist. Beispielsweise kann die dem Schieber 42 zugewandte erste Sperrklinkenseite 441 länger sein als die dem Trägheitskörper 46 zugewandte zweite Sperrklinkenseite 442. Alternativ oder zusätzlich kann eine Rückstellfeder vorgesehen sein (nicht gezeigt), die eine Bewegung der Sperrklinke 44 von der Freigabestellung in die Sperrstellung bewirkt und/oder unterstützt.

Der Gasdruckregler 10 kann ferner eine Überdrucksicherheitseinrichtung (im Englischen auch Pressure-Relief-Valve oder kurz PRV genannt) aufweisen. Die Überdrucksicherheitseinrichtung ist dazu ausgebildet ist, einen im zweiten Gehäusebereich vorhandenen Überdruck abzubauen. Dazu wird bei einem vorbestimmten Überdruck ein zwischen dem zweiten und ersten Gehäusebereich vorhandener Kanal freigegeben, sodass das im zweiten Gehäusebereich zu viel vorhandene Gas in die Umgebung abgeblasen werden kann. Der Kanal kann eine in der Hebelöse 38 vorhandene Nut (nicht gezeigt) sein.

Die hier mittels der Sicherheitseinrichtung 40 vorgeschlagene Sicherheitsabschaltung im Crash-Fall kann unabhängig von der erwähnten Überdrucksicherheitseinrichtung erfolgen.

Die folgenden Aspekte sind bevorzugte Ausgestaltungen der Offenbarung:
1. Gasdruckregler (10), vorzugsweise Druckminderer, aufweisend:
   - ein Gehäuse (12),
   - eine in dem Gehäuse (12) angeordnete Membran (14), die das Gehäuse (12) in einen ersten Gehäusebereich (16) und in einen zweiten Gehäusebereich (18) unterteilt, wobei
      - der erste Gehäusebereich (16) ein gegenüber einer Umgebung des Gehäuses (12) offener Gehäusebereich ist und
      - der zweite Gehäusebereich (18) ein mit Gas beaufschlagbarer Gehäusebereich ist,
   - eine in dem ersten Gehäusebereich (16) angeordnete Stellfeder (20), die mit der Membran (14) verbunden und dazu ausgebildet ist, die Membran (14) mit einer vorbestimmten Vorspannkraft vorzuspannen,
   - ein in dem zweiten Gehäusebereich (18) angeordneter Gaseinlass (24),
   - ein in dem zweiten Gehäusebereich (18) angeordneter Gasauslass (28),
   - ein in dem zweiten Gehäusebereich (18) angeordneter Ventilhebel (30), der strömungsmäßig zwischen dem Gaseinlass (24) und dem Gasauslass (28) angeordnet und zwischen einer geschlossenen Stellung, in der der Gaseinlass (24) geschlossen, und einer offenen Stellung, in der der Gaseinlass (24) geöffnet ist, bewegbar ist,
   - eine Hebelöse (38), die mit der Membran (14) und dem Ventilhebel (30) derart verbunden ist, dass eine durch einen Druckunterschied zwischen dem ersten und zweiten Gehäusebereich (16, 18) hervorgerufene Auslenkung der Membran (14) in eine Bewegung des Ventilhebels (30) überführbar ist, und
   - eine Sicherheitseinrichtung (40), die dazu ausgebildet ist, den Gaseinlass (24) bei Überschreiten einer vorbestimmten Beschleunigung zu schließen, wobei die Sicherheitseinrichtung (40) aufweist:
      - einen Schieber (42), der im Sicherheitsfall derart auf den Ventilhebel (30) wirkt, dass der Ventilhebel (30) unabhängig von einer Bewegung der Hebelöse (38) in die geschlossene Stellung bewegbar ist.
2. Gasdruckregler (10) nach Aspekt 1, wobei der Schieber (42) in dem zweiten Gehäusebereich (18) angeordnet ist.
3. Gasdruckregler (10) nach Aspekt 1 oder 2, wobei eine Bewegung des Schiebers (42) von einer Bewegung des Ventilhebels (30) und/oder von einer Bewegung der Hebelöse (38) entkoppelt ist.
4. Gasdruckregler (10) nach einem der vorhergehenden Aspekte, wobei die Hebelöse (38) entlang einer ersten Achse (60) bewegbar ist und der Schieber (42) entlang einer zur ersten Achse (60) unter einem Winkel verlaufenden zweiten Achse (62) bewegbar, vorzugsweise schiebbar, ist, vorzugsweise wobei der Winkel zwischen der ersten Achse (60) und der zweiten Achse (62) in einem Bereich von 80° bis 100°, vorzugsweise in einem Bereich von 85° bis 95°, weiter vorzugweise 90° ist.
5. Gasdruckregler (10) nach einem der vorhergehenden Aspekte, wobei
   - der Schieber (42) eine schräg verlaufende Betätigungsfläche (52) aufweist, die dazu ausgebildet ist, den Ventilhebel (30) bei einer Bewegung des Schiebers (42) in Schließrichtung von der offenen Stellung in die geschlossene Stellung zu bewegen, vorzugsweise wobei
   - der Schieber (42) entlang einer horizontalen Führungsfläche (54) geführt ist und die Betätigungsfläche (52) mit der horizontalen Führungsfläche (54) einen spitzen Winkel (56) einnimmt, wobei der spitze Winkel (56) in einem Bereich von 10° bis 60°, vorzugsweise in einem Bereich von 20° bis 45°, liegt.
6. Gasdruckregler (10) nach einem der vorhergehenden Aspekte, wobei das Gehäuse (12) einen Anschlag aufweist, der dazu ausgebildet ist, eine Bewegung des Schiebers (42) in Schließrichtung zu begrenzen.
7. Gasdruckregler (10) nach einem der vorhergehenden Aspekte, wobei der Schieber (42) eine außerhalb des Gehäuses (12) angeordnete Betätigungseinheit (68) aufweist, die dazu ausgebildet ist, den Schieber (42) von einer Schließstellung in eine geöffnete Stellung zurückzuziehen und vorzugsweise einen Auslösezustand der Sicherheitseinrichtung (40) anzuzeigen.
8. Gasdruckregler (10) nach einem der vorhergehenden Aspekte, wobei der Ventilhebel (30) als ein erster Kipphebel ausgebildet ist, vorzugsweise wobei
   - der erste Kipphebel um eine erste Kippachse (32) kippbar ist,
   - der erste Kipphebel eine erste Ventilhebelseite (34) und eine zweite Ventilhebelseite (36) aufweist,
   - ein Ende der ersten Ventilhebelseite (34) zum Öffnen und Schließen des Gaseinlasses (24) ausgebildet ist und
   - ein Ende der zweiten Ventilhebelseite (36) zur Kopplung mit der Hebelöse (38) ausgebildet ist,
   - vorzugsweise wobei die erste Ventilhebelseite (34) kürzer als die zweite Ventilhebelseite (36) ist.
9. Gasdruckregler (10) nach Aspekt 8, wobei der erste Kipphebel derart ausgebildet ist, dass der Kipphebel selbsttätig in die offene Stellung kippt.
10. Gasdruckregler (10) nach einem der vorhergehenden Aspekte, wobei
   - ein von dem Gaseinlass (24) fernes Ende des Ventilhebels (30) in einer Öffnung der Hebelöse (38) geführt ist,
   - die Öffnung als Langloch (48) ausgebildet ist, wobei das in der Öffnung geführte Ende des Ventilhebels (30) durch den Schieber (42) derart auslenkbar ist, dass der Ventilhebel (30) unabhängig von einer Bewegung der Hebelöse (38) von der offenen Stellung in die geschlossene Stellung bewegbar ist,
   - vorzugsweise wobei eine Längsrichtung des Langlochs (48) sich in Richtung der ersten Achse (60) erstreckt.
11. Gasdruckregler (10) nach Aspekt 10, wobei die Öffnung als eine Bohrung mit einer Verlängerung ausgebildet ist, wobei das in der Öffnung geführte Ende des Ventilhebels (30) durch den Schieber (42) entlang der Verlängerung von der offenen Stellung in die geschlossene Stellung auslenkbar ist.
12. Gasdruckregler (10) nach Aspekt 10 oder 11, wobei in der offenen Stellung des Ventilhebels (30) das in der Öffnung geführte Ende des Ventilhebels (30) an einem als Anlagefläche (50) ausgebildeten ersten Ende der Öffnung anliegt.
13. Gasdruckregler (10) nach Aspekt 12, wobei bei einer Auslenkung der Membran (14) in Richtung des ersten Gehäusebereichs (16) die Anlagefläche (50) das in der Öffnung geführte Ende derart kontaktiert, dass der Ventilhebel (30) in Richtung der geschlossenen Stellung bewegt wird.
14. Gasdruckregler (10) nach einem der vorhergehenden Aspekte, wobei der Schieber (42) in einer auf den Ventilhebel (30) wirkenden Schließrichtung vorgespannt ist, vorzugsweise mittels einer sich am Gehäuse abstützenden Feder (43), weiter bevorzugt einer Schraubenfeder, insbesondere einer Schraubenfeder, die um einen Abschnitt des Schiebers (42) angeordnet ist.
15. Gasdruckregler (10) nach Aspekt 14, wobei die Sicherheitseinrichtung (40) eine Sperrklinke (44) aufweist, die dazu ausgebildet ist, eine Bewegung des Schiebers (42) in Schließrichtung zu sperren.
16. Gasdruckregler (10) nach Aspekt 15, wobei die Sperrklinke (44) in dem zweiten Gehäusebereich (18) angeordnet ist.
17. Gasdruckregler (10) nach Aspekt 15 oder 16, wobei
   - die Sperrklinke (44) um eine zweite Kippachse (58) kippbar ist,
   - die Sperrklinke (44) eine erste Sperrklinkenseite (441) und eine auf der gegenüberliegenden Seite der zweiten Kippachse (58) angeordnete zweite Sperrklinkenseite (442) aufweist, und
   - die erste Sperrklinkenseite (441) die Bewegung des Schiebers (42) in Schließrichtung sperrt.
18. Gasdruckregler (10) nach Aspekt 17, wobei die erste Sperrklinkenseite (441) länger als die zweite Sperrklinkenseite (442) ist.
19. Gasdruckregler (10) nach Aspekt 17 oder 18, wobei die Sperrklinke (44) derart ausgebildet ist, dass sie selbsttätig in eine die Bewegung des Schiebers (42) in Schließrichtung sperrende Sperrstellung kippt.
20. Gasdruckregler (10) nach Aspekt 17, 18, oder 19, wobei die zweite Kippachse (58) in einem Winkel zur ersten Kippachse (32) angeordnet ist, vorzugsweise wobei der Winkel zwischen der zweiten Kippachse (58) und der ersten Kippachse (32) in einem Bereich von 80° bis 100°, vorzugsweise in einem Bereich von 85° bis 95°, weiter vorzugweise 90° ist.
21. Gasdruckregler (10) nach einem der Aspekte 17 bis 20, wobei der Schieber (42) entlang der zweiten Achse (62) bewegbar, vorzugsweise schiebbar, ist, und die zweite Achse (62) in einem Winkel zur zweiten Kippachse (58) angeordnet ist, wobei der Winkel zwischen der zweiten Achse (60) und der zweiten Kippachse (58) in einem Bereich von 80° bis 100°, vorzugsweise in einem Bereich von 85° bis 95°, weiter vorzugweise 90° ist.
22. Gasdruckregler (10) nach einem der vorhergehenden Aspekte,
   - wobei die Sicherheitseinrichtung (40) einen Trägheitskörper (46) aufweist, der dazu ausgebildet ist, bei Überschreiten der vorbestimmten Beschleunigung durch eine auftretende Beschleunigungskraft von einer Ruheposition in eine ausgelenkte Position bewegt zu werden,
   - vorzugsweise wobei in der Ruheposition des Trägheitskörpers (46) eine Bewegung des Schiebers (42) in Schließrichtung gesperrt ist und in der ausgelenkten Position des Trägheitskörpers (46) eine Bewegung des Schiebers (42) in Schließrichtung freigegeben ist, sodass der Ventilhebel (30) durch den Schieber (42) in die geschlossene Stellung bewegbar und der Gaseinlass (24) durch den Ventilhebel (30) verschließbar ist.
23. Gasdruckregler (10) nach Aspekt 22, wobei
   - die Sperrklinke (44) ein erstes Ende (64) und ein zweites Ende (66) aufweist,
   - in einer Sperrstellung der Sperrklinke (44) das erste Ende (64) eine Betätigungsfläche (52) des Schiebers (42) kontaktiert und das zweite Ende (66) den Trägheitskörper (46) kontaktiert, und
   - der Trägheitskörper (46) in der ausgelenkten Position derart positioniert ist, dass die Sperrklinke (44) von der Sperrstellung in eine Freigabestellung bewegbar ist, in der eine Sperrung des Schiebers (42) aufgehoben und die Bewegung des Schiebers (42) in Schließrichtung freigegeben ist.
24. Gasdruckregler (10) nach Aspekt 22 oder 23, wobei der Trägheitskörper (46) in dem zweiten Gehäusebereich (18) angeordnet ist.
25. Gasdruckregler (10) nach Aspekt 22, 23 oder 24, wobei der Trägheitskörper (46) eine Kugel ist.
26. Gasdruckregler (10) nach Aspekt 22, 23 oder 24, wobei der Trägheitskörper (46) ein flächig aufliegender Trägheitskörper ist.
27. Gasdruckregler (10) nach einem der Aspekte 22 bis 26, wobei die Sperrklinke (44), vorzugsweise deren zweites Ende (66), in den Trägheitskörper (46) einrastet, vorzugsweise in eine obere Nut (70) des Trägheitskörpers (46).
28. Gasdruckregler (10) nach einem der Aspekte 22 bis 27, wobei die Sicherheitseinrichtung (40) einen magnetischen Rückholmechanismus aufweist, der dazu ausgebildet ist, den ausgelenkten Trägheitskörper (46) in seine Ruheposition zurückzuholen.
29. Gasdruckregler (10) nach Aspekt 28, wobei
   - der Trägheitskörper (46) ein ferromagnetisches Material aufweist und das Gehäuse (12) einen Magneten aufweist, der eine magnetische Rückholkraft auf den Trägheitskörper (46) ausübt, und/oder
   - der Trägheitskörper (46) einen ersten Magneten (70) aufweist und das Gehäuse (12) einen zweiten Magneten (72) aufweist, wobei die beiden Magnete (70, 72) derart ausgewählt sind, dass eine auf den Trägheitskörper (46) wirkende magnetische Rückholkraft ausgeübt wird.
30. Gasdruckregler (10) nach Aspekt 28 oder 29, wobei, wenn die Sicherheitseinrichtung (40) ausgelöst hat und der Schieber (42) den Ventilhebel (30) in die geschlossene Stellung bewegt hat, eine magnetische Rückholung des Trägheitskörpers (46) so lange unterbunden ist, bis der Schieber (42) in seine geöffnete Stellung zurückgezogen ist.
31. Gasdruckregler (10) nach einem der Aspekte 23 bis 30, wobei das zweite Ende (66) der Sperrklinke (44) eine Kontaktfläche (74) aufweist, die dazu ausgebildet ist, bei einer Rückholung des Trägheitskörpers (46) in die Ruheposition eine Außenfläche des Trägheitskörpers (46) zu kontaktieren und dadurch eine Drehung der Sperrklinke (44) von der Freigabestellung in die Sperrstellung zu bewirken und/oder zu unterstützen.
32. Gasdruckregler (10) nach Aspekt 31, wobei, wenn die Sicherheitseinrichtung (40) ausgelöst hat und der Schieber (42) den Ventilhebel (30) in die geschlossene Stellung bewegt hat, die Bewegung der Sperrklinke (44) von der Freigabestellung in die Sperrstellung durch den Schieber (42) so lange blockiert ist, bis der Schieber (42) in seine geöffnete Stellung zurückgezogen ist.

## Patentansprüche

1. Gasdruckregler (10), vorzugsweise Druckminderer, aufweisend:
- ein Gehäuse (12),
- eine in dem Gehäuse (12) angeordnete Membran (14), die das Gehäuse (12) in einen ersten Gehäusebereich (16) und in einen zweiten Gehäusebereich (18) unterteilt, wobei
- der erste Gehäusebereich (16) ein gegenüber einer Umgebung des Gehäuses (12) offener Gehäusebereich ist und
- der zweite Gehäusebereich (18) ein mit Gas beaufschlagbarer Gehäusebereich ist,
- eine in dem ersten Gehäusebereich (16) angeordnete Stellfeder (20), die mit der Membran (14) verbunden und dazu ausgebildet ist, die Membran (14) mit einer vorbestimmten Vorspannkraft vorzuspannen,
- ein in dem zweiten Gehäusebereich (18) angeordneter Gaseinlass (24),
- ein in dem zweiten Gehäusebereich (18) angeordneter Gasauslass (28),
- ein in dem zweiten Gehäusebereich (18) angeordneter Ventilhebel (30), der strömungsmäßig zwischen dem Gaseinlass (24) und dem Gasauslass (28) angeordnet und zwischen einer geschlossenen Stellung, in der der Gaseinlass (24) geschlossen, und einer offenen Stellung, in der der Gaseinlass (24) geöffnet ist, bewegbar ist,
- eine Hebelöse (38), die mit der Membran (14) und dem Ventilhebel (30) derart verbunden ist, dass eine durch einen Druckunterschied zwischen dem ersten und zweiten Gehäusebereich (16, 18) hervorgerufene Auslenkung der Membran (14) in eine Bewegung des Ventilhebels (30) überführbar ist, und
- eine Sicherheitseinrichtung (40), die dazu ausgebildet ist, den Gaseinlass (24) bei Überschreiten einer vorbestimmten Beschleunigung zu schließen, wobei die Sicherheitseinrichtung (40) aufweist:
- einen Schieber (42), der im Sicherheitsfall derart auf den Ventilhebel (30) wirkt, dass der Ventilhebel (30) unabhängig von einer Bewegung der Hebelöse (38) in die geschlossene Stellung bewegbar ist.

2. Gasdruckregler (10) nach Anspruch 1, wobei
- der Schieber (42) in dem zweiten Gehäusebereich (18) angeordnet ist, und/oder
- eine Bewegung des Schiebers (42) von einer Bewegung des Ventilhebels (30) und/oder von einer Bewegung der Hebelöse (38) entkoppelt ist.

3. Gasdruckregler (10) nach einem der vorhergehenden Ansprüche, wobei die Hebelöse (38) entlang einer ersten Achse (60) bewegbar ist und der Schieber (42) entlang einer zur ersten Achse (60) unter einem Winkel verlaufenden zweiten Achse (62) bewegbar, vorzugsweise schiebbar, ist, vorzugsweise wobei der Winkel zwischen der ersten Achse (60) und der zweiten Achse (62) in einem Bereich von 80° bis 100°, vorzugsweise in einem Bereich von 85° bis 95°, weiter vorzugweise 90° ist.

4. Gasdruckregler (10) nach einem der vorhergehenden Ansprüche, wobei
- der Schieber (42) eine schräg verlaufende Betätigungsfläche (52) aufweist, die dazu ausgebildet ist, den Ventilhebel (30) bei einer Bewegung des Schiebers (42) in Schließrichtung von der offenen Stellung in die geschlossene Stellung zu bewegen, vorzugsweise wobei
- der Schieber (42) entlang einer horizontalen Führungsfläche (54) geführt ist und die Betätigungsfläche (52) mit der horizontalen Führungsfläche (54) einen spitzen Winkel (56) einnimmt, wobei der spitze Winkel (56) in einem Bereich von 10° bis 60°, vorzugsweise in einem Bereich von 20° bis 45°, liegt.

5. Gasdruckregler (10) nach einem der vorhergehenden Ansprüche, wobei der Ventilhebel (30) als ein erster Kipphebel ausgebildet ist, vorzugsweise wobei
- der erste Kipphebel um eine erste Kippachse (32) kippbar ist,
- der erste Kipphebel eine erste Ventilhebelseite (34) und eine zweite Ventilhebelseite (36) aufweist,
- ein Ende der ersten Ventilhebelseite (34) zum Öffnen und Schließen des Gaseinlasses (24) ausgebildet ist und
- ein Ende der zweiten Ventilhebelseite (36) zur Kopplung mit der Hebelöse (38) ausgebildet ist,
- vorzugsweise wobei die erste Ventilhebelseite (34) kürzer als die zweite Ventilhebelseite (36) ist und/oder der erste Kipphebel derart ausgebildet ist, dass der Kipphebel selbsttätig in die offene Stellung kippt.

6. Gasdruckregler (10) nach einem der vorhergehenden Ansprüche, wobei
- ein von dem Gaseinlass (24) fernes Ende des Ventilhebels (30) in einer Öffnung der Hebelöse (38) geführt ist,
- die Öffnung als Langloch (48) ausgebildet ist, wobei das in der Öffnung geführte Ende des Ventilhebels (30) durch den Schieber (42) derart auslenkbar ist, dass der Ventilhebel (30) unabhängig von einer Bewegung der Hebelöse (38) von der offenen Stellung in die geschlossene Stellung bewegbar ist,
- vorzugsweise wobei eine Längsrichtung des Langlochs (48) sich in Richtung der ersten Achse (60) erstreckt.

7. Gasdruckregler (10) nach Anspruch 6, wobei die Öffnung als eine Bohrung mit einer Verlängerung ausgebildet ist, wobei das in der Öffnung geführte Ende des Ventilhebels (30) durch den Schieber (42) entlang der Verlängerung von der offenen Stellung in die geschlossene Stellung auslenkbar ist.

8. Gasdruckregler (10) nach Anspruch 6 oder 7, wobei in der offenen Stellung des Ventilhebels (30) das in der Öffnung geführte Ende des Ventilhebels (30) an einem als Anlagefläche (50) ausgebildeten ersten Ende der Öffnung anliegt, vorzugsweise wobei bei einer Auslenkung der Membran (14) in Richtung des ersten Gehäusebereichs (16) die Anlagefläche (50) das in der Öffnung geführte Ende derart kontaktiert, dass der Ventilhebel (30) in Richtung der geschlossenen Stellung bewegt wird.

9. Gasdruckregler (10) nach einem der vorhergehenden Ansprüche, wobei die Sicherheitseinrichtung (40) eine Sperrklinke (44) aufweist, die dazu ausgebildet ist, eine Bewegung des Schiebers (42) in Schließrichtung zu sperren, vorzugsweise wobei die Sperrklinke (44) in dem zweiten Gehäusebereich (18) angeordnet ist.

10. Gasdruckregler (10) nach Anspruch 9, wobei
- die Sperrklinke (44) um eine zweite Kippachse (58) kippbar ist,
- die Sperrklinke (44) eine erste Sperrklinkenseite (441) und eine auf der gegenüberliegenden Seite der zweiten Kippachse (58) angeordnete zweite Sperrklinkenseite (442) aufweist, und
- die erste Sperrklinkenseite (441) die Bewegung des Schiebers (42) in Schließrichtung sperrt, vorzugsweise wobei
- die erste Sperrklinkenseite (441) länger als die zweite Sperrklinkenseite (442) ist, und/oder
- die Sperrklinke (44) derart ausgebildet ist, dass sie selbsttätig in eine die Bewegung des Schiebers (42) in Schließrichtung sperrende Sperrstellung kippt.

11. Gasdruckregler (10) nach einem der vorhergehenden Ansprüche,
- wobei die Sicherheitseinrichtung (40) einen Trägheitskörper (46) aufweist, der dazu ausgebildet ist, bei Überschreiten der vorbestimmten Beschleunigung durch eine auftretende Beschleunigungskraft von einer Ruheposition in eine ausgelenkte Position bewegt zu werden,
- vorzugsweise wobei in der Ruheposition des Trägheitskörpers (46) eine Bewegung des Schiebers (42) in Schließrichtung gesperrt ist und in der ausgelenkten Position des Trägheitskörpers (46) eine Bewegung des Schiebers (42) in Schließrichtung freigegeben ist, sodass der Ventilhebel (30) durch den Schieber (42) in die geschlossene Stellung bewegbar und der Gaseinlass (24) durch den Ventilhebel (30) verschließbar ist.

12. Gasdruckregler (10) nach Anspruch 11 in Verbindung mit Anspruch 9 oder 10, wobei
- die Sperrklinke (44) ein erstes Ende (64) und ein zweites Ende (66) aufweist,
- in einer Sperrstellung der Sperrklinke (44) das erste Ende (64) eine Betätigungsfläche (52) des Schiebers (42) kontaktiert und das zweite Ende (66) den Trägheitskörper (46) kontaktiert, und
- der Trägheitskörper (46) in der ausgelenkten Position derart positioniert ist, dass die Sperrklinke (44) von der Sperrstellung in eine Freigabestellung bewegbar ist, in der eine Sperrung des Schiebers (42) aufgehoben und die Bewegung des Schiebers (42) in Schließrichtung freigegeben ist, vorzugsweise wobei
- der Trägheitskörper (46) in dem zweiten Gehäusebereich (18) angeordnet ist.

13. Gasdruckregler (10) nach Anspruch 11 oder 12, wobei die Sicherheitseinrichtung (40) einen magnetischen Rückholmechanismus aufweist, der dazu ausgebildet ist, den ausgelenkten Trägheitskörper (46) in seine Ruheposition zurückzuholen, vorzugsweise wobei
- der Trägheitskörper (46) ein ferromagnetisches Material aufweist und das Gehäuse (12) einen Magneten aufweist, der eine magnetische Rückholkraft auf den Trägheitskörper (46) ausübt, und/oder
- der Trägheitskörper (46) einen ersten Magneten (70) aufweist und das Gehäuse (12) einen zweiten Magneten (72) aufweist, wobei die beiden Magnete (70, 72) derart ausgewählt sind, dass eine auf den Trägheitskörper (46) wirkende magnetische Rückholkraft ausgeübt wird.

14. Gasdruckregler (10) nach Anspruch 13, wobei, wenn die Sicherheitseinrichtung (40) ausgelöst hat und der Schieber (42) den Ventilhebel (30) in die geschlossene Stellung bewegt hat, eine magnetische Rückholung des Trägheitskörpers (46) so lange unterbunden ist, bis der Schieber (42) in seine geöffnete Stellung zurückgezogen ist.

15. Gasdruckregler (10) nach einem der Ansprüche 11 bis 14 in Verbindung mit Anspruch 9 oder 10, wobei
- das zweite Ende (66) der Sperrklinke (44) eine Kontaktfläche (74) aufweist, die dazu ausgebildet ist, bei einer Rückholung des Trägheitskörpers (46) in die Ruheposition eine Außenfläche des Trägheitskörpers (46) zu kontaktieren und dadurch eine Drehung der Sperrklinke (44) von der Freigabestellung in die Sperrstellung zu bewirken und/oder zu unterstützen, und/oder
- wenn die Sicherheitseinrichtung (40) ausgelöst hat und der Schieber (42) den Ventilhebel (30) in die geschlossene Stellung bewegt hat, die Bewegung der Sperrklinke (44) von der Freigabestellung in die Sperrstellung durch den Schieber (42) so lange blockiert ist, bis der Schieber (42) in seine geöffnete Stellung zurückgezogen ist.
